Europäisches Patentamt

European Patent Office

Office européen des brevets

(19)

(11) Publication number: **0 141 887**
A1

## (12) EUROPEAN PATENT APPLICATION

(21) Application number: **83306995.8**

(22) Date of filing: **16.11.83**

(51) Int. Cl.⁴: **H 04 N 5/76**
// G09F27/00, G09B5/06

(43) Date of publication of application: **22.05.85**
Bulletin 85/21

(84) Designated Contracting States: **AT BE CH DE FR GB IT LI LU NL SE**

(71) Applicant: **Imperial Computers Limited, 268 Lichfield Road, GB-Sutton Coldfield, West Midlands B74 2UH (GB)**

(72) Inventor: **Lea, Maurice James, 17 Maple Road, Sutton Coldfield West Midlands B72 1JP (GB)**
Inventor: **Evetts, John Owen Thornton, 50 Maple Road, Sutton Coldfield West Midlands B72 1JP (GB)**

(74) Representative: **Nash, Keith Wilfrid et al, KEITH W. NASH & Co. Pearl Assurance House 90-92 Regent Street, Cambridge CB2 1DP (GB)**

(54) Improvements in and relating to television-type displays.

(57) A system for displaying on a television a picture containing moving picture content corresponding to the display of a sequence of pictures in a moving picture display, comprises:

a) a television monitor

b) a static storage device mounted on a card or in a frame or similar to allow for carriage and/or postage and the like,

c) means for recording in binary form electrical signals in the static storage device, corresponding to the first of a sequence of pictures which together make up a so-called moving picture display together with further information in a series of discreet locations, which further information corresponds to the differences only between the current picture and the next in the said sequence so as to produce a modified version of the current picture for display next in turn,

d) the static storage device having provision for the storage of information concerning the time to lapse between the display of the current and the next picture in the said sequence,

e) reading means adapted to receive the static storage device having signals stored thereon and for reading same so as to produce the electrical output signal corresponding to the first and subsequent of a sequence of pictures, and

f) connection means for connecting the output of the reading means to the television monitor to display the output signals in the form of a sequence of pictures.

Conveniently the static storage device is a solid state storage device in the form of an erasable programmable memory (EPROM).

Title:   Improvements in and relating to television
         type displays

DESCRIPTION

Field of the invention

This invention concerns television based display
systems, particularly for displaying a sequence of
pictures or words for example for advertising or
tuition purposes.  However, it is to be understood
that the invention is not limited to this particular
type of application and may be used for the display
of information corresponding to any sequence of pictures
which can then appear as a sequence of moving pictures
as in a cineamatographic film.

Background to the invention

It is known to store signals corresponding to
television type pictures on a magnetic tape or disc
and to obtain the signals by replaying the stored
information from the disc or tape.  By storing a sequence
of pictures and displaying them in sequence in rapid
succession so a moving picture display is obtained.

It is also known to digitise a static television
picture and code the digitised signal in binary form
and store this in a static binary store such as a shift
register based storage device.

It is an object of the present invention to provide
a system and device by which a moving picture television
display can be obtained from a so-called static storage
device.

It is a further object of the present invention
to provide a system by which different moving picture
television-type displays can be supplied in package form
to remotely located television display units.

0141887

-2-

## Summary of the invention

According to one aspect of the present invention a system for displaying on a television a picture containing moving picture content corresponding to the display of a sequence of pictures in a moving picture display, comprises:-

a. a television monitor

b. a static storage device mounted on a card or in a frame or similar to allow for carriage and/or postage and the like,

c. means for recording in binary form electrical signals in the static storage device, corresponding to the first of a sequence of pictures which together make up a so-called moving picture display together with further information in a series of discreet locations, which further information corresponds to the differences only between the current picture and the next in the said sequence so as to produce a modified version of the current picture for display next in turn,

d. the static storage device having provision for the storage of information concerning the time to lapse between the display of the current and the next picture in the said sequence,

e. reading means adapted to receive the static storage device having signals stored thereon and for reading same so as to produce the electrical output signal corresponding to the first and subsequent of a sequence of pictures, and

f. connection means for connecting the output of the reading means to the television monitor to display the output signals in the form of a sequence of pictures.

Conveniently the static storage device is a solid state storage device in the form of an erasible programmable memory (EPROM).

Preferably information is stored in the storage device corresponding to the colour required in any region in the displayed pictures and the television monitor is a colour television monitor.

Where the monitor is a standard broadcast television receiver (as will commonly be the case) signal generating and modulating circuit means is conveniently provided for generating a modulated RF signal for application to the ariel input socket of the receiver.

0141887

-4-

The invention will now be described by way of example with reference to the accompanying drawings in which:-

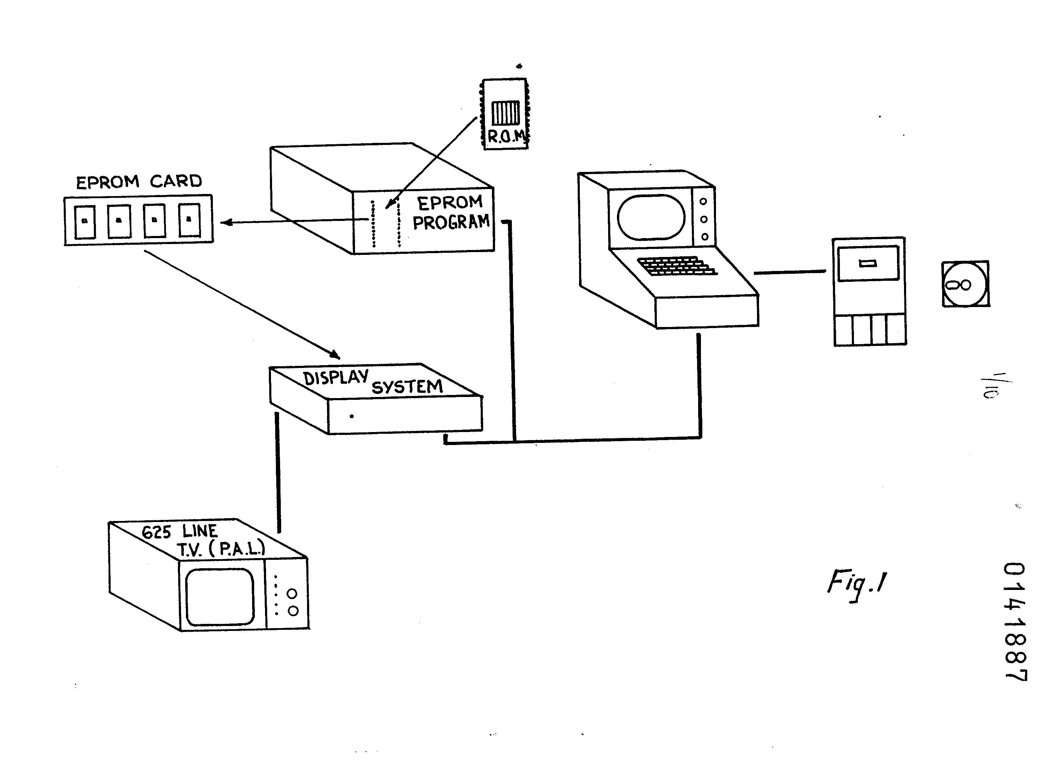

Fig.1 is a general layout diagram of a complete system for generating signals corresponding to a sequence of pictures and storing same on an EPROM and EPROM reading means for converting stored signals for display on a television monitor.

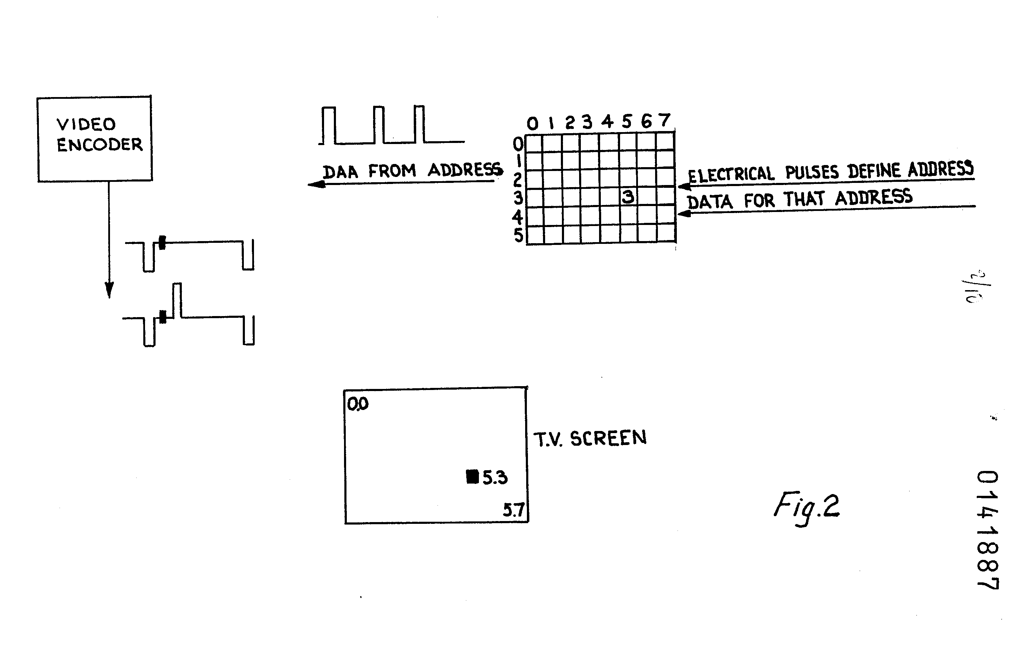

Fig.2 is a block circuit diagram of the overall system,

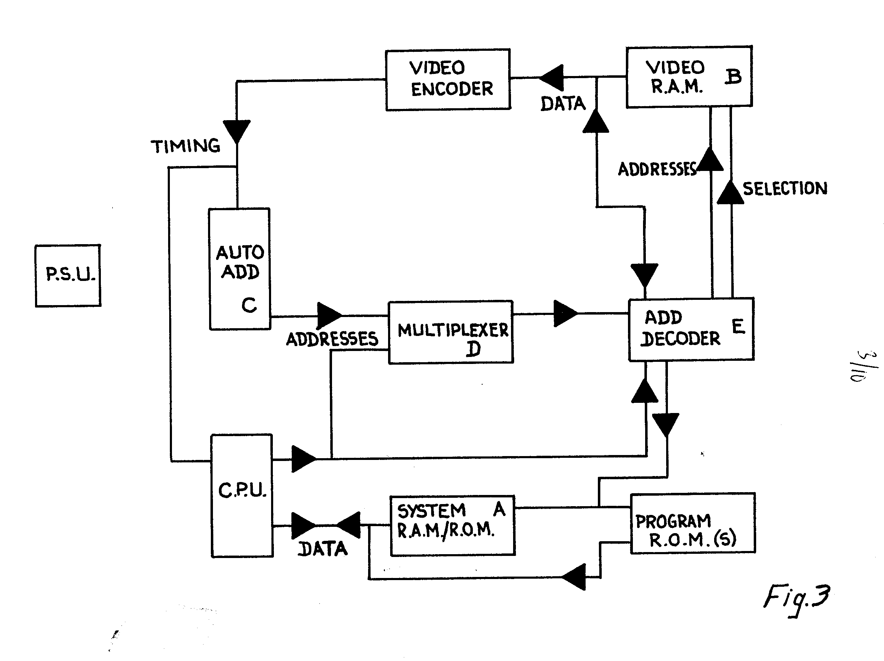

Fig.3 illustrates the relationship between the signals defining address and the data for the address in a memory,

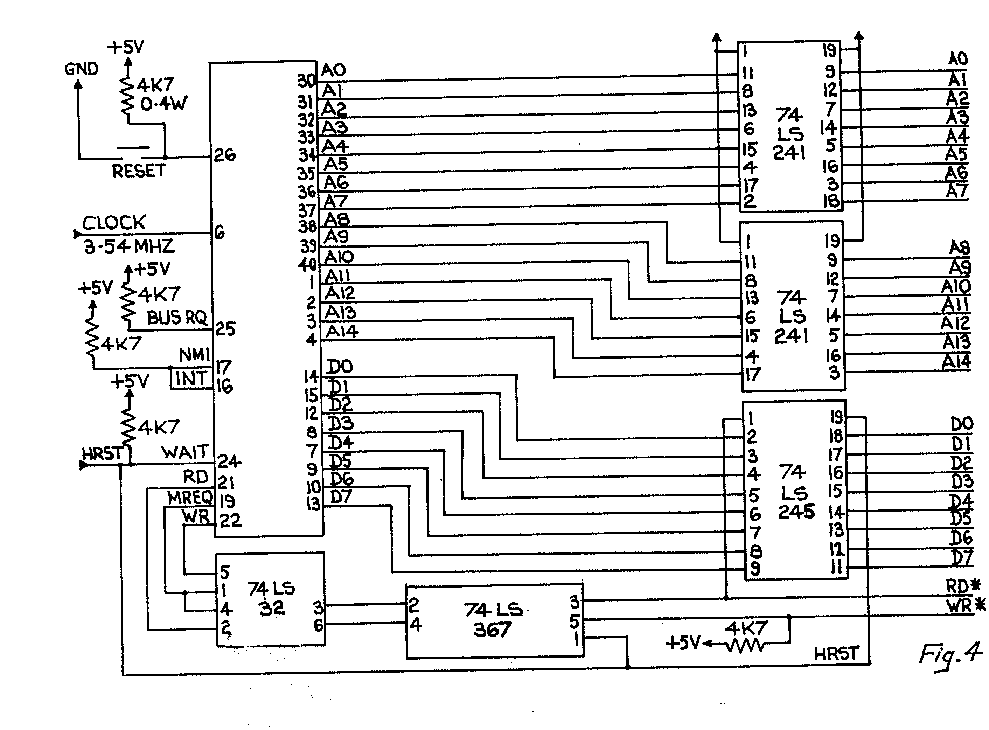

Fig.4 is a circuit diagram of the central processor unit based on a Z80 micro-processor,

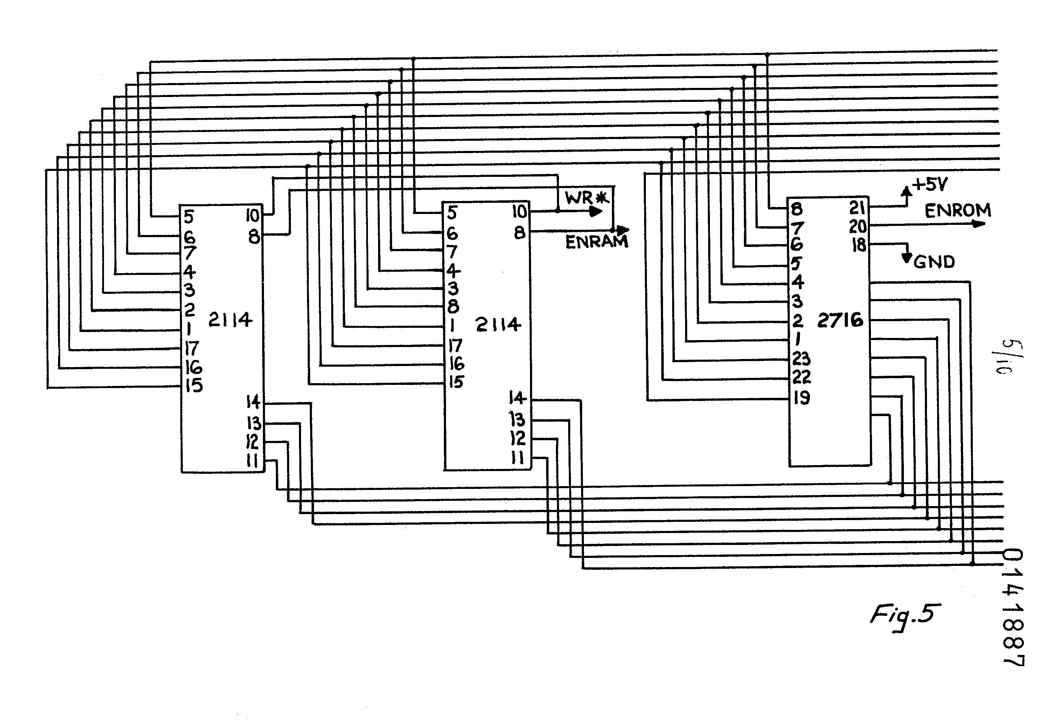

Fig.5 is a circuit diagram of the system random access memory and read only memory,

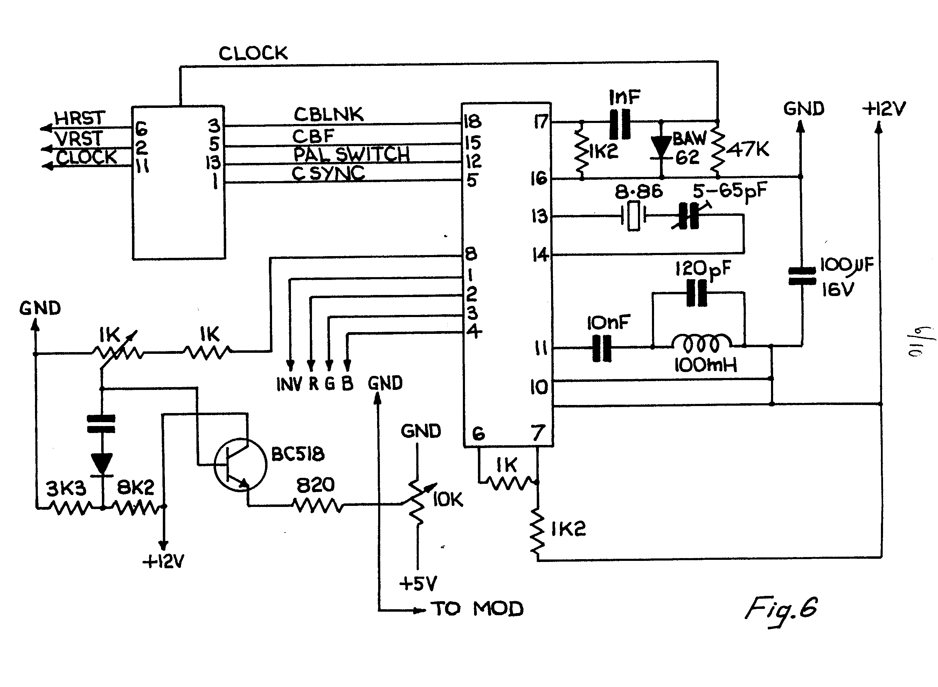

Fig.6 is a circuit diagram of the video encoder,

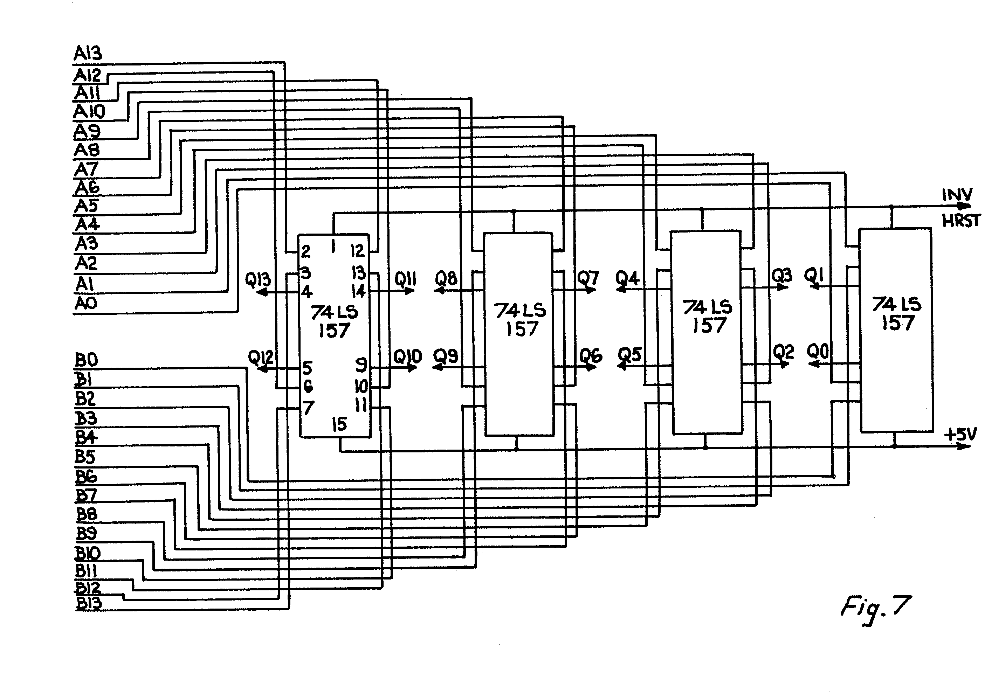

Fig.7 is a circuit diagram of the multiplexer for producing a signal known as HRST,

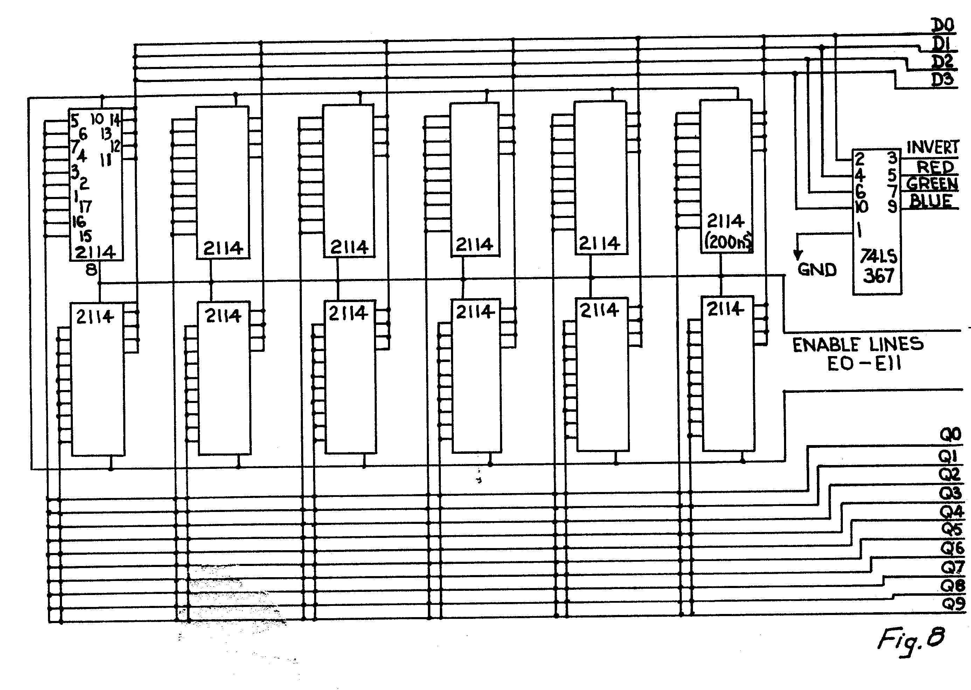

Fig.8 is a circuit diagram of the video random access memory,

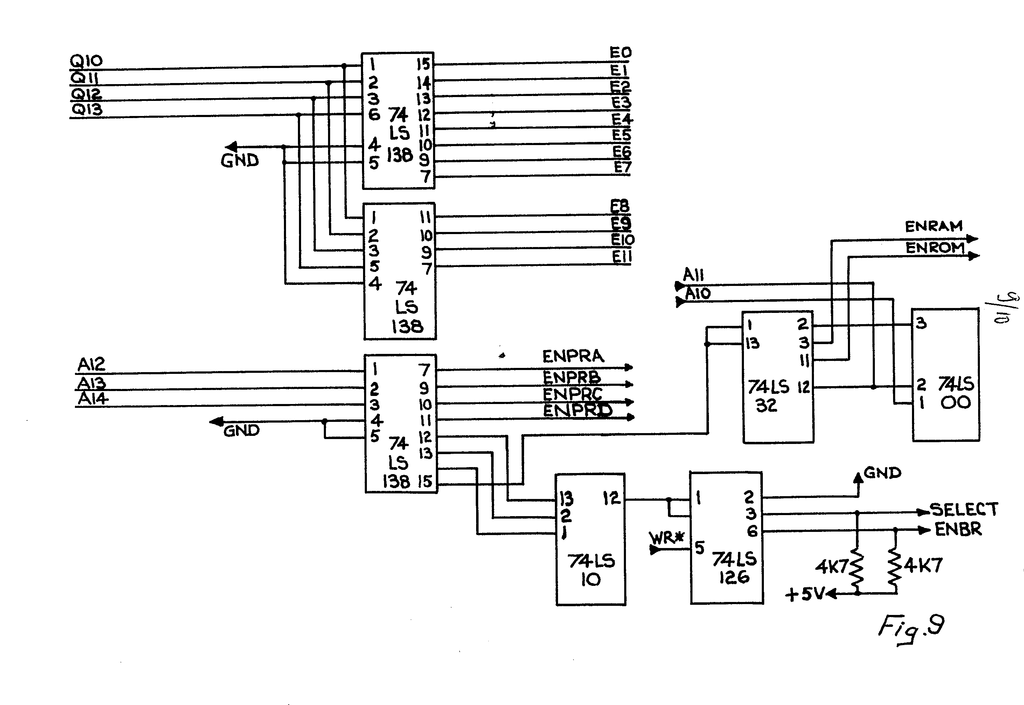

Fig.9 is a circuit diagram of the address decoder circuits, and

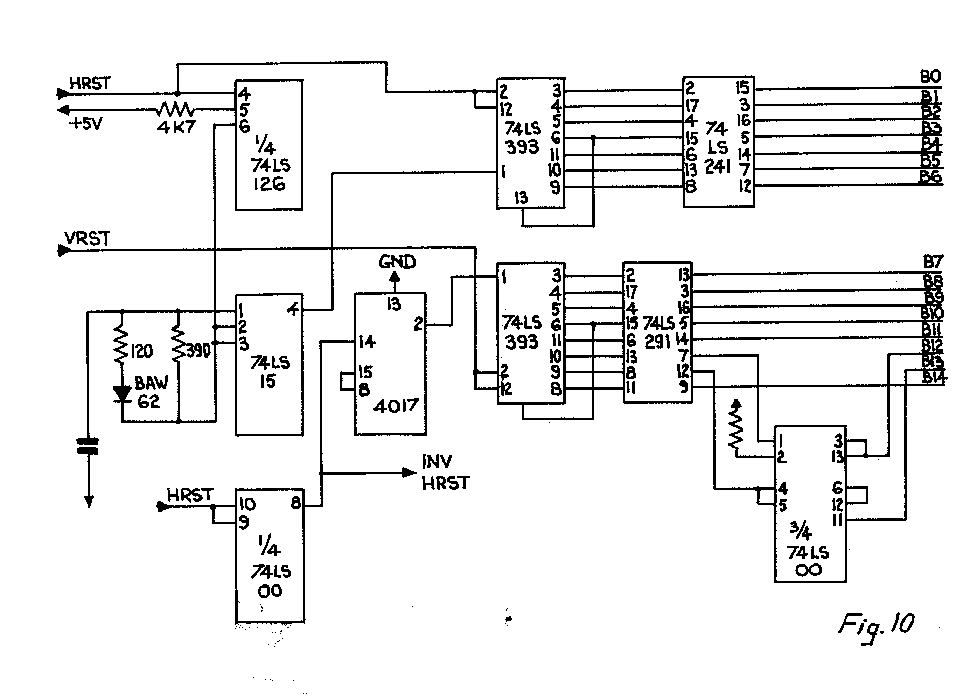

Fig.10 is a circuit diagram of the auto address circuits.

Detailed description of the system and drawings

The colour display system described here is a (Z80) controlled 15 colour graphic display system. The video output can drive any domestic colour t.v. set, of any size.

Information describing the display is fed to the processor from either an E.P.R.O.M. (erasable read only memory) card or alternatively from another (Z80) based computer.

The end user only requires the display unit fitted with an EPROM card to display any pre written sequence, the sequence will automaticaly be repeated.

The program that is held on the EPROM card is produced from an internal process, as shown on sheet 1.

A production program is loaded into a computer such as the TRS 80 that is connected to a display system.

The production program enables the operator to draw shapes and produce text in any of the available colours and styles very quickly, each individual part of the display can be altered. The method is similar to making a flip book cartoon, each image that is different from the previous one is 'saved' into a memory area along with other data such as time before displaying the next "page". A page can be any part of the display thus only differences between images need to be 'saved'. The data required for the sequence is then program into an EPROM(S). The programmed EPROM is fitted into an EPROM card, the EPROM card is in turn put into the display system. The display will begin when a reset button is pressed after powering up the system, it will only stop when the system is switched off.

The main sections within the display system are shown on sheet 2. The following is a step by step description of how the data on the EPROM card becomes a recognisable image on the television set.

After applying power to the system via the P.S.U., the reset button is depressed this forces the C.P.U. (central processing unit) to get its first instruction from the system ROM (box A). The system ROM is an EPROM that has the same program in all display systems, unlike the EPROM card which contains different progams for different displays. The program on the system ROM contains routines that are commonly used by the display system time delays etc etc.

In the same box as the system ROM is the system RAM this is the area in which the CPU stores temporary data or any data that is not part of the display image.

The instruction that the CPU gets from the system ROM is then executed and the CPU gets its next instruction, this may tell the CPU to get the first piece of data from the EPROM card and to put that data into the video R.A.M. (box B).

Address lines from the CPU and the auto add (box C) go to a section called the multiplexer (box D) this is acting as a selector choosing which address lines to let out the other side and into the video RAM. The address decoder (box E) helps define which part of the video RAM is being written to or read from.

The purpose of the auto address is to count from 0 to 12288 in an exact relationship with the spot moving across the television screen. Each number uniquely defines a single point in the video RAM. Any data that has been put into this unique location is then read from the RAM and fed to the video encoder this combines the data that is being sent to the television and so any changes in this data will be reflected by changes of colour on the television screen.

Sheet 3 shows in a very simplefied way this process.

Location (3,5) of the video RAM has a number 3 in it, this was put here by the CPU, the auto add will then be counting first 00 then 01, 02, 03, 04, all the way to 5,7, any data that is in these locations will be outputed to the video encoder which combines this data with the signals that the television will need.

0141887

-7-

The number that each address holds tells the video encoder what colour that location on the screen is to be.

If the number changes then the colour of that part of the screen changes and so a combination of numbers when read from the video RAM will produce a regoniseable shape on the television.

All the timing signals are fed to the auto add and the CPU sections from the video encoder.

The main sections within the display system are shown on sheet 2. The following is a step by step description of how the data on the EPROM card becomes a regonisable image on the television set.

After applying power to the system via the P.S.U. the reset button is depressed this forces th C.P.U. (central processing unit) to get its first instruction from the system ROM (box A). The system ROM is an EPROM that has the same program in all display systems, unlike the EPROM card which contains routines that are commonly used by the display system time delays etc etc.

In the same box as the system ROM is the system RAM this is the area in which the CPU stores temporary data or any data that is not part of the display image.

The instruction that the CPU gets from the system ROM is then executed and the CPU gets its next instruction, this may tell the CPU to get the first peice of data from the EPROM card and to put that data into the video R.A.M. (box B).

Address lines from the CPU and the auto add (box C) go to a section called the multiplexer (box D) this is acting as a selector choosing which address lines to let out the other side and into the video RAM. The address decoder (box E) helps define which part of the video RAM is being written to or read from.

The purpose of the auto address is to count from 0 to 12288 in an exact relationship with the spot moving . across the television screen. Each number uniquely defines a single point in the video RAM. Any data that has been put into this unique location is then read from the RAM and fed to the video encoder this combines the data that is being sent to it from the video RAM with the signal that is being sent to the television and so any changes in this data will be reflected by changes of colour on the television screen.

Sheet 3 shows in a very simplefied way this process.

Location (3,5) of the video RAM has a number 3 in it, this was put here by the CPU, the auto add will then be counting first OO then O1, O2, O3, O4, all the way to 5,7, any data that is in these locations will be outputed to the video encoder which combines this data with the signals that the television will need.

The number that each address holds tells the video encoder what colour that location on the screen is to be.

If the number changes then the colour of that part of the screen changes and so a combination of numbers when read from the video RAM will produce a recognisable shape on the television.

All the timing signals are fed to the auto add and the CPU sections from the video encoder.

The graphic pictures that this system will produce are each made up of small squares. There are 12,288 individual squares to use. Any of these can be illuminated in any of the 15 colours available. If every square is given the same value in the video RAM then the entire screen of the television set will be all one particular colour.

The ability to give an impression of movement is achieved because of the very fast speed that the system operates at. Every time a new piece of information is put into the video RAM an imediate change is reflected on the television screen.

The internal program that was mentioned earlier is the tool by which pictures are drawn. In conventional computer displays the picture is built by a single program that has to be written for that particular image. This internal program gives the ability to cut out long, time consuming methods by giving the operator a system that can already print letters, squares, triangles, lines, circles etc and only requires parameters such as how big, what colour, and where.

## Description of circuit parts C.P.U.

The central processing unit is a Z80 (A) type (IC 35) this is run at 3.54MHz, the clock is supplied from the video circuits described later.

Address lines, data lines and some control signals from the C.P.U. are fed through buffers the outputs from these buffers are capable of driving further circuits which would normally put a greater work load onto the C.P.U.

An or gate is used to combine WR, RD, and MREQ signals from the C.P.U. to produce two new signlas called WRx and RDx. These two signals define the direction the data is travelling.

The watt input of the C.P.U. is controlled by HRST, a signal which is supplied from the video circuits this ensures that theC.P.U. is not working during a displayable part of T.V. line and so ensures that the T.V. picture itself is not contaminated by the C.P.U. moving data during this time.

## System RAM/ROM

The 2716 2Kx8 bit eraseable read only memory contains a short program that instructs the C.P.U. mediately the system is switched on.

Two 1Kx4bit random access memories are arranged to provide bits this area memory is available to the C.P.U. to store temp values or results of calculations.

## Auto Address

The HRST signal from the video circuits this is used to control a high frequency oscilator formed by R5, R6, D1, C20, and IC 14, the control from HRST ensures that the phase of the clock is always the same at the start of each line.

The output from this oscilator is very precise 2.45MHZ which is fed to a dual four bit counter the outputs from this counter is passed through a 241 type buffer to provide B0-B6.

HRST is also applied to an AND gate this inverts the HRST and applies this signal to a decade counter. The decade counter is configured to count every three lines the pulse from this is fed to another dual 4 bit binary counter this provi counting from O to 96 and after going through the buffer IC20 the output at PIN 7 is changed to provide the correct start address c ode when the signals B0 to B14 are decoded.

HRST is applied to the counter providing B0-B6 to reset the counters at the end of each line.

VRST a signal from the video circuits is applied to the other counter at the end of each frame.

Address Decoder

The purpose of the address decoder is to turn certain specific circuits on or off. This is accomplished by the 74LS138 3 to 8 line decoders. The first two decode the signals Q10-Q13 the combinations of these lines will allow one of the lines E0-E11 to be active each one of these enables a particular video RAM.

The other 74LS138 is used to decode the address lines A12 to A14 from the C.P.U. The outputs are used to select one of the four E.P.R.O.M.S ENPRA, ENPRB, ENPRC, ENPRD, or further decoding to select the system R.A.M. or the system R.O. M.

The signals select and ANBR are used to select various buffer combinations of buffers.

Video RAM

The video RAM portion of the system consists of twelve random access memories. Each memory will hold enough data for 128x8 PICELLS. The individual IC8S are enabled by the signals from the address decoder when enabled data can b e read from or written to a specific address within that I.C.

Data from the video RAM can be passed to and from the C.P.U. or alternatively via the buffer to the video circuit.

## Multiplexer

Inputs AO-A13 from the C.P.U. address bus and inputs BO-B13 from the auto address bus are selected to be output as QO-Q13 depending on the state of the invhrst signal This allows the C.P.U. access to the video RAM only during a nondisplayable part of a line.

## Video Encoder

This circuit accepts the INV,R,G, and B signals from the video RAM and combines them with the sycronizing signals the video signal is then passed to the modulator via level control circuttry and finally to the television.

The signals HRST, VRST, and clock are all syncronized with the T.V. signals.

0141887

<u>Patent Claims</u>

1. A. system for displaying on a television a picture containing moving picture content corresponding to the display of a sequence of pictures in a moving picture display, comprising;

   a. a television monitor

   b. a static storage device mounted on a card or in a frame or similar to allow for carriage and/or postage and the like,

   c. means for recording in binary form electrical signals in the static storage device, corresponding to the first of a sequence of pictures which together make up a so-called moving picture display together with further information in a series of discreet locations, which further information corresponds to the differences only between the current picture and the next in the said sequence so as to produce a modified version of the current picture for display next in turn,

   d. the static storage device having provision for the storage of information concerning the time to lapse between the display of the current and the next picture in the said sequence,

   e. reading means adapted to receive the static storage device having signals stored thereon and for reading same so as to produce the electrical output signal corresponding to the first and subsequent of a sequence of pictures, and

   f. connection means for connecting the output of the reading means to the television monitor to display the output signals in the form of a sequence of pictures.

2. A system as claimed in claim 1 wherein the static storage device is a solid state storage device in the form of an erasible programmable memory (EPROM).

3. A system as claimed in claim 1 or claim 2 wherein information is stored in the storage device corresponding to the colour required in any region in the displayed pictures and the television monitor is a colour television monitor.

4. A systemt as claimed in either of claims 1 and 2 wherein the monitor is a standard broadcast television receiver (as will commonly be the case) and the signal generating and modulating circuit means is conveniently provided for generating a modulated RF signal for application to the ariel input socket of the receiver.

Fig.1

Fig.2

Fig.3

VIDEO R.A.M. B

SELECTION

ADDRESSES

ADD DECODER E

PROGRAM R.O.M. (s)

DATA

VIDEO ENCODER

MULTIPLEXER D

SYSTEM A R.A.M./R.O.M.

ADDRESSES

DATA

AUTO ADD C

C.P.U.

TIMING

P.S.U.

0141887

Fig. 4

Fig.5

Fig.6

Fig. 7

0141887

8/10

Fig.8

Fig.9

Fig. 10

0141887

0141887

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-4 045 789 (ATARI INC.)<br>* Whole document * | 1 | H 04 N 5/76 //<br>G 09 F 27/00<br>G 09 B 5/06 |
| Y | | 2-4 | |
| Y | US-A-4 388 620 (D. SHERMAN)<br>* Column 2, line 18 - column 3, line 26 * | 2 | |
| A | US-A-4 296 476 (S. MAYER)<br>* Column 5, line 47 - column 6, line 58; column 17, line 40 - column 18, line 63 * | 1,2 | |
| Y | | 3,4 | TECHNICAL FIELDS SEARCHED (Int. Cl. 3) |
| A | US-A-4 301 503 (J. FREDERIKSEN)<br>* Column 3, line 31 - column 11, line 32 * | 1-4 | |
| A | NEW ELECTRONICS, vol. 15, no. 14, July 1982, pages56-58, London, GB; N. WILLIAMS: "Dedicated c.r.t. control" | | H 04 N<br>G 09 B<br>A 63 F<br>G 09 F<br>G 06 F |
| A | EP-A-0 002 617 (ATARI INC.) | | |
| A | EP-A-0 013 801 (ATARI INC.) | | |
| | --- -/- | | |

The present search report has been drawn up for all claims

| Place of search | Date of completion of the search | Examiner |
|---|---|---|
| THE HAGUE | 26-08-1984 | VERSCHELDEN J. |